# EUROPÄISCHE PATENTSCHRIFT

(11) **EP 2 478 314 B1**
(45) Veröffentlichungstag und Bekanntmachung des Hinweises auf die Patenterteilung: **02.07.2014**
(21) Anmeldenummer: 10755140.0
(22) Anmeldetag: 15.09.2010
(51) Int. Cl.: F27B 1/02, F27B 1/26, F27D 19/00, F27D 21/00, C04B 2/12

(54) **GLEICHSTROM-GEGENSTROM-REGENERATIV-KALKOFEN SOWIE VERFAHREN ZUM BETREIBEN DESSELBEN**
PARALLEL FLOW-COUNTER FLOW REGENERATIVE LIME KILN AND METHOD FOR THE OPERATION THEREOF
FOUR À CHAUX RÉGÉNÉRATEUR À ÉQUICOURANT - CONTRE-COURANT ET PROCÉDÉ POUR FAIRE FONCTIONNER LE FOUR

(30) Priorität: 15.12.2009 DE 102009058304
(43) Veröffentlichungstag der Anmeldung: 25.07.2012
(73) Patentinhaber: Maerz Ofenbau AG, 8027 Zürich (CH)
(72) Erfinder: PIRINGER, Hannes, 5712 Beinwill am See (CH)
(74) Vertreter: Tetzner, Michael
(86) Internationale Anmeldenummer: PCT/EP2010/063559
(87) Internationale Veröffentlichungsnummer: WO 2011/072894

(56) Entgegenhaltungen:
- H. RUCH: "Mess- und Regelungstechnik beim Kalkbrennen" ZEMENT-KALK-GIPS, Bd. 1973, Nr. 6, Juni 1973 (1973-06), Seiten 257-263, XP002608932 Wiesbaden in der Anmeldung erwähnt

## Beschreibung

Die Erfindung betrifft einen Gleichstrom-Gegenstrom-Regenerativ-Kalkofen (GGR-Kalkofen) sowie Verfahren zum Betreiben derselben.

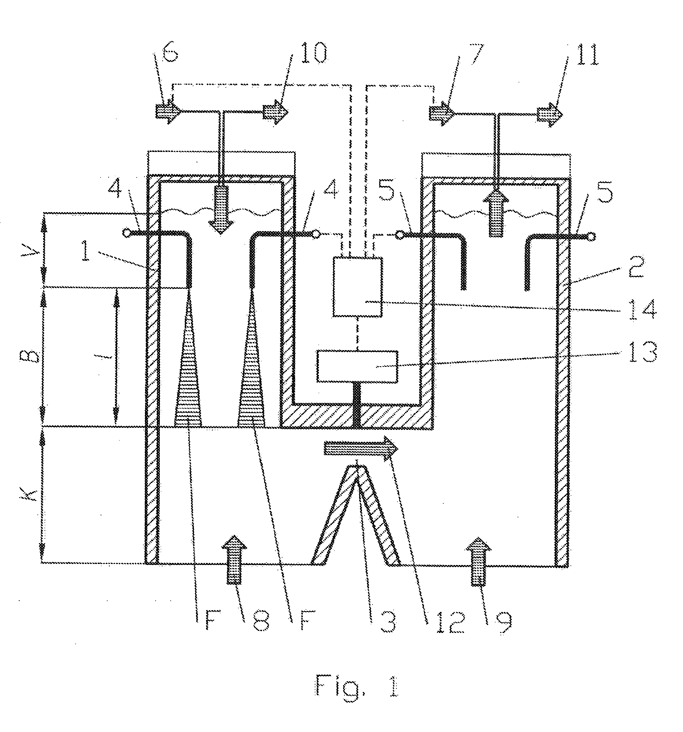

GGR-Kalköfen werden zum Brennen von Kalkstein eingesetzt und bestehen gemäß Figur 1 aus wenigstens zwei Schächten 1, 2, die jeweils eine Vorwärmzone V, eine Brennzone B und eine Kühlzone K aufweisen. Beide Schächte sind mit einem Überströmkanal 3 miteinander verbunden. Das zu brennende Material wird von oben in beide Schächte aufgegeben und unten als gebranntes Material abgezogen.

Beide Schächte werden abwechselnd als Brennschacht und Abgasschacht betrieben, wobei dem Brennschacht Verbrennungsluft im Gleichstrom mit dem Material und Brennstoff zugeführt werden und die dabei entstehenden heißen Abgase zusammen mit der von unten zugeführten, erwärmten Kühlluft über den Überströmkanal in den Abgasschacht geleitet werden, wo die Abgase im Gegenstrom zum Material nach oben abgeleitet werden und das Material dabei vorwärmen. Nach einer vorgegebenen Zeitspanne von beispielsweise 15 min. wird die Funktion der beiden Schächte vertauscht, d.h. der Brennschacht wird zum Abgasschacht und umgekehrt. Dieses Verfahren erlaubt ein sehr effizientes Brennen des Kalksteins im Gleichstrom mit den Verbrennungsgasen und ein regeneratives Vorwärmen des Kalksteins im Gegenstrom zu den heißen Abgasen.

Aufgrund verschiedener Störgrößen, wie z.B. Schwankungen im Heizwert des Brennstoffes, Schwankungen im Karbonatgehalt des Rohstoffs oder Schwankungen der Wärmeverluste des Ofens, kann eine Nachregulierung der Brennstoffmenge erforderlich werden. Eine weitere Störgröße bilden kerogene Bestandteile, die oftmals im zu brennenden Kalkstein enthalten sind. Hierbei handelt es sich um polymeres, organisches Material, welches bei Aufheizung Kohlenwasserstoffe freisetzt. Diese Kerogene sind jedoch im Rohstoff nicht homogen verteilt, sodass eine Nachregulierung der spezifischen Wärmezufuhr des Kalkofens bis zur 6% erforderlich ist, um eine konstante Produktqualität zu erreichen.

Die Produktqualität wird in erster Linie durch den Rest-CO₂-Gehalt des gebrannten Kalkes und dessen Reaktivität bestimmt. Beide Parameter sollen möglichst konstant den vorgegebenen Sollwerten entsprechen. Diese beiden Eigenschaften des Kalkes können jedoch bisher erst am Endprodukt überprüft werden, sodass eine daraufhin erfolgter Regeleingriff erst mit einer Verzögerung von 12 bis 16 Std. (Durchlaufzeit des Materials) erfolgen konnte.

Der Ofenwärter hat zwar bisher schon durch Temperaturmessung im Bereich des Überströmkanals und eine daraus abgeleitete, manuelle Anpassung der Wärmezufuhr eine Beeinflussung der Produktqualität bewirkt, jedoch setzt diese Art der Regelung ein hohes Maß an Erfahrung voraus und führt dennoch nicht immer zu zufriedenstellenden Ergebnissen.

Ein Gleichstrom-Regenerativ-Ofens ist beispielsweise aus der DE 29 27 834 A1 bekannt. Die Mess- und Regelungstechnik eines solchen Ofens wird ferner durch H. Ruch : "Mess- und Regelungstechnik beim Kalkbrennen" in Zement-Kalk-Gips, Heft 6/1973, Seiten 257-263 beschrieben, wo insbesondere eine Verhältnisregelung zur Anwendung kommt, bei der eine Veränderung der Brennstoffmenge auch eine entsprechende Anpassung der für die Verbrennung dienenden Verbrennungsluftmenge vorsieht, wobei diese Anpassung verhältnisgleich erfolgt, so dass das Brennstoff-Luft-Verhältnis konstant bleibt.

Der Erfindung lag daher die Aufgabe zugrunde, ein Verfahren zum Betreiben eines GGR-Kalkofens und einen GGR-Kalkofen anzugeben, um eine hohe Produktqualität des gebrannten Kalkes mit hoher Zuverlässigkeit zu gewährleisten.

Erfindungsgemäß wird diese Aufgabe durch die Merkmale der Ansprüche 1 und 13 gelöst.

Das erfindungsgemäße Verfahren zum Betreiben eines GGR-Kalkofens mit wenigstens zwei Schächten, die jeweils eine Vorwärmzone, eine Brennzone und eine Kühlzone aufweisen sowie einem die beiden Schächte verbindenden Überströmkanal, besteht im Wesentlichen aus folgenden Verfahrensschritten:
- die beiden Schächte werden abwechselnd als Brennschacht und Abgasschacht betrieben,
- dem Brennschacht wird Verbrennungsluft und Brennstoff zugeführt, wobei sich eine entsprechende Flammenlänge ausbildet und
- die im Brennschacht entstehenden heißen Gase gelangen über den Überströmkanal in den Abgasschacht,
- wobei wenigstens ein für die Ausbildung der Flammenlänge charakteristischer Parameter der heißen Gase durch eine direkte oder indirekte Messung im Bereich des Überströmkanals ermittelt wird und das Verhältnis von Brennstoff zu Verbrennungsluft in Abhängigkeit dieses Parameters geändert wird, um eine vorgegebene Flammenlänge einzustellen.

Der erfindungsgemäße GGR-Kalkofen besteht im Wesentlichen aus
- wenigstens zwei Schächten, die jeweils eine Vorwärmzone, eine Brennzone und eine Kühlzone aufweisen, wobei die beiden Schächte abwechselnd als Brennschacht und Abgasschacht betrieben werden,
- wenigstens einer jedem Schacht zugeordneten Brennstoff-Zuführeinrichtung,
- wenigstens einer jedem Schacht zugeordneten Verbrennungsluft-Zuführeinrichtung,
- einem die beiden Schächte verbindenden Überströmkanal
- einer im Bereich des Überströmkanals angeordneten Messeinrichtung zur Ermittlung wenigstens eines Parameters der heißen Gase im Überströmkanal sowie
- einer Steuereinrichtung, die mit der Brennstoff-Zuführeinrichtung, der Verbrennungsluft-Zuführeinrichtung und der Messeinrichtung in Verbindung steht und zur Änderung der Flammenlänge gemäß dem Verfahren nach einem oder mehreren der vorhergehenden Ansprüche ausgebildet ist.

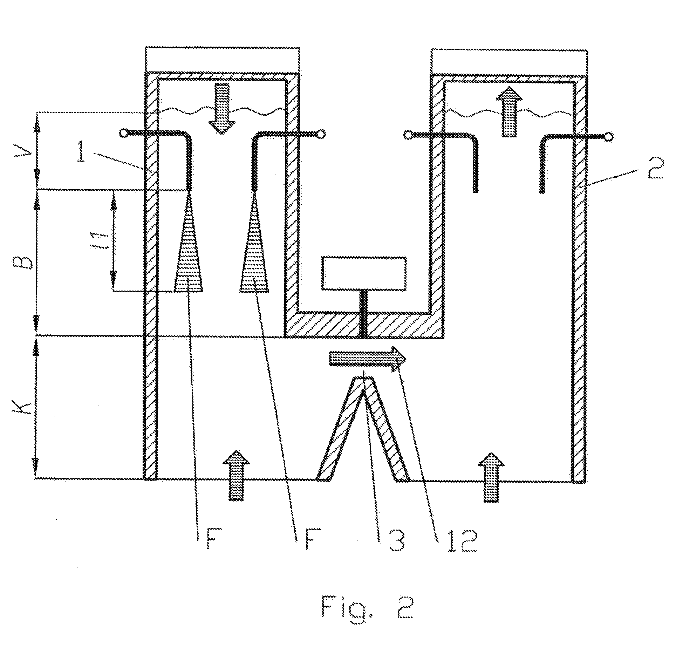

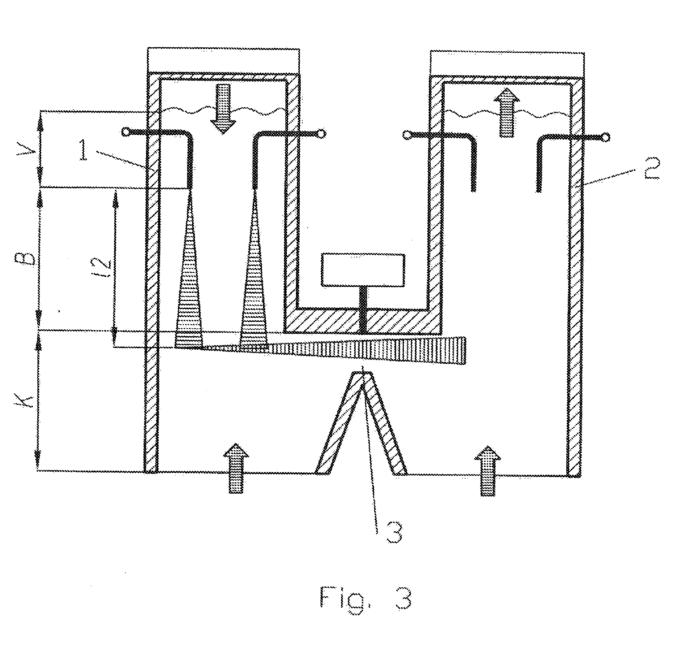

Der Erfindung liegt die Erkenntnis zugrunde, dass die Reaktivität des gebrannten Kalks dann möglichst konstant gehalten werden kann, wenn die Länge der sich in der Brennzone ausbildenden Flamme möglichst wenig variiert, d. h. ebenfalls möglichst konstant gehalten wird. In Figur 1 ist die normale Flammenlänge l dargestellt, bei der sich die Flammen bis zum unteren Ende der Brennzone B ausbilden und gerade nicht in den Überstromkanal hinreichen. In dieser Betriebsweise wird die thermische Energie ideal über die gesamte Länge der Brennzone des Brennschachtes verteilt. Bei dieser Betriebsweise ist der Luftüberschuss korrekt eingestellt. Eine zu kurze Flammenlänge l₁,sie sie in Figur 2 dargstellt ist, führt zu hohen Brenntemperaturen im oberen Bereich der Brennzone B und zu einer Produktqualität mit weniger Reaktivität. In diese Betriebsweise ist der Luftüberschuss höher als im Fall der Fig.1. Ist der Luftüberschuss zu gering, kommt es zum Durchschlagen der Flammen durch den Überströmkanal (Figur 3).

Die Flammenlänge hat somit einen direkten Einfluss auf die Reaktivität des gebrannten Kalkes. Durch eine kontinuierliche Messung im Bereich des Überströmkanals und einem anhand dieser Messung ermittelten Parameter der heißen Gase, welcher für die Flammenlänge charakteristisch ist, kann wesentlich früher als bisher ein Regeleingriff vorgenommen werden, um die Reaktivität des Endproduktes möglichst konstant zu halten. Bisher war man immer auf eine nachträgliche Messung angewiesen, sodass der Ofen dadurch möglicherweise 12 bis 16 Std. in einer falschen Einstellung betrieben wurde.

Weitere Ausgestaltung der Erfindung sind Gegenstand der Unteransprüche.

Der für die Flammenlänge charakteristische Parameter der heißen Gase kann beispielsweise durch eine Temperaturmessung, eine NOₓ-Messsung und/oder eine CO-Messung erfolgen.

Wird der Parameter durch eine Temperaturmessung im Bereich des Überströmkanals ermittelt. Kann dabei insbesondere die durchschnittliche Temperatur der heißen Gase im Überströmkanal unter Berücksichtigung der Minimaltemperaturen der heißen Gase im Überströmkanal herangezogen werden.

Gemäß einem bevorzugten Verfahren zur Einstellung der Flammenlänge im Brennschacht werden folgende Verfahrensschritte durchgeführt:
a. Ermittlung des Durchschnitts der Temperatur der heißen Gase im Überströmkanal,
b. Ermittlung des Durchschnitts der Minimaltemperaturen der heißen Gase im Überströmkanal,
c. Berechnung der Differenz (ΔT) der beiden Durchschnitte,
d. Vergleichen der Differenz mit einem einstellbaren Sollwert und Änderung der zuzuführenden Verbrennungsluftmenge in Abhängigkeit des Vergleichsergebnisses.

Bei der Ermittlung des Durchschnitts der Temperatur der heißen Gase im Überströmkanal bleibt zweckmäßigerweise ein einstellbarer Zeitraum zu Beginn und zum Ende jeder in die Ermittlung eingehenden Brennzeit unberücksichtigt, da diese Abschnitte oftmals Unregelmäßigkeiten aufweisen und das Ergebnis verfälschen können.

Weiterhin kann die Ermittlung des Durchschnitts der Minimaltemperatur der heißen Gase im Überströmkanal als auch die Ermittlung des Durchschnitts der Temperatur der heißen Gase über eine einstellbare Anzahl von Ofenzyklen erfolgen. Zur Verringerung von Variationen in den Messwerten ist es weiterhin zweckmäßig, wenn in den Verfahrensschritten a) und/oder b) der gleitende Durchschnitt ermittelt wird.

Entsprechend dem Verfahrenschritt d) wird die zuzuführende Verbrennungsluftmenge erhöht, wenn die ermittelte Differenz gegenüber dem einstellbaren Sollwert zu groß ist und verringert, wenn die ermittelte Differenz gegenüber dem einstellbaren Sollwert zu klein ist.

Gemäß einer weiteren Variante des Verfahrens wird die zuzuführende Brennstoffmenge erhöht, wenn die Temperatur der heißen Gase im Überströmkanal zu klein ist und entsprechend verringert, wenn die Temperatur der heißen Gase zu groß ist.

Für die durchschnittliche Temperatur der heißen Gase im Überströmkanal wird ein Sollwert vorgegeben, der zweckmäßigerweise in Abhängigkeit der Durchsatzleistung des Ofens und/oder der Korngröße des zu brennenden Materials eingestellt wird. Dieser Sollwert dient dann für die Änderung der Brennstoffmenge und/oder der Änderung der Verbrennungsluftmenge.

Weitere Vorteile und Ausgestaltungen der Erfmdung werden im Folgenden anhand der Beschreibung und der Zeichnung näher erläutert.

In der Zeichnung zeigen
- Fig. 1: eine schematische Darstellung des GGR-Kalkofens mit einer sich in Betrieb ausbildenden optimalen Flammenlänge,
- Fig. 2: eine schematische Darstellung des GGR-Kalkofens mit einer zu kurzen Flammenlänge,
- Fig. 3: eine schematische Darstellung des GGR-Kalkofens mit einer zu langen Flammenlänge und
- Fig. 4: eine Darstellung des Temperaturverlaufs im Bereich des Überströmkanals.

Die beiden Schächte 1, 2 des in den Fig. 1 bis Fig. 3 dargstellten Kalkschachtofens weisen jeweils Brennstoff-Zuführeinrichtungen 4, 5 und Verbrennungsluft-Zuführeinrichtungen 6, 7 auf. Neben den beiden Verbrennungsluft-Zuführeinrichtungen 6, 7 sind im oberen Bereich außerdem Abgas-Ableiteinrichtungen 10, 11 vorgesehen. Die Brennstoff-Zuführeinrichtungen 4, 5 werden beispielsweise durch Lanzen gebildet, die im Übergangsbereich zwischen Vorwärmzone V und Brennzone B im Materialbett münden. Weiterhin wird die Kühlzone K von unten über Kühlluft-Zuführeinrichtungen 8, 9 mit Kühlluft versorgt.

Im Betrieb wird den beiden Schächte 1, 2 über nicht näher dargestellte Zuführmittel von oben zu brennenden Kalk zugeführt, während das fertig gebrannte und gekühlte Material am unteren Ende der beiden Schächte abgezogen wird, sodass das Material kontinuierlich von oben nach unten wandert. Die Durchlaufzeit beträgt üblicherweise 12 bis 24 Std. Während der Behandlungszeit werden die beiden Schächte 1, 2 immer abwechselnd als Brennschacht und Abgasschacht betrieben. Im dargestellten Ausführungsbeispiel gemäß den Figuren 1 bis 3 ist jeweils der Schacht 1 als Brennschacht dargestellt. Hierzu werden Verbrennungsluft und Brennstoff über die Verbrennungsluft-Zuführeinrichtung 6 bzw. über die Brennstoff-Zuführeinrichtung 4 zugeführt, sodass sich ein oder mehrere Flammen F in der Brennzone B ausbilden.

Für eine optimale Ausnutzung der zugeführten thermischen Energie entspricht die Flammlänge l der Länge der Brennzone B. Mit anderen Worten reichen die Flammen gerade bis zum unteren Ende des als Brennzone B vorgesehenen Bereichs. Die bei der Verbrennung entstehenden heißen Abgase und die von unten zugeführte und sich in der Kühlzone K erwärmende Kühlluft werden als heiße Gase 12 über den Überströmkanal 3 in den als Abgasschacht fungierenden Schacht 2 abgeleitet. Zu diesem Zeitpunkt werden dem Schacht 2 weder Verbrennungsluft noch Brennstoff zugeführt. Auf diese Weise können die heißen Abgase das Material im Schacht 2 im Gegenstrom durchströmen und werden über die Ableiteinrichtung 11 abgeführt.

Nach einem einstellbaren Zeitintervall von beispielsweise 15 min. wird die Verbrennungsluft- und Brennstoffzufuhr im Schacht 1 abgestellt und die Abgas-Ableiteinrichtung 10 geöffnet. Gleichzeitig wird die Verbrennung im Schacht 2 durch Zufuhr von Brennstoff über die Brennstoffzuführeinrichtung 5 und Zufuhr von Verbrennungsluft über die Verbrennungsluft-Zuführeinrichtung 7 gestartet. Die dann entstehenden heißen Gase werden dann im umgekehrter Richtung über den Schacht 1 abgeleitet.

Im Bereich des Überströmkanals 3 ist ferner eine Messeinrichtung 13 vorgesehen, die insbesondere zur Messung des NOₓ-Gehalts oder des CO-Gehalts der heißen Gase 12 ausgebildet sein kann. Vorzugsweise handelt es sich aber um eine Temperaturmesseinrichtung zur direkten oder indirekten Messung der Temperatur der heißen Gase ^12. Dabei können beispielsweise Thermoelemente zur Anwendung kommen, die sich im Strom der heißen Gase 12 befinden oder im Bereich der Ausmauerung des Überstromskanals 3 angeordnet sind. Besonders geeignet ist jedoch die Verwendung eines optischen Pyrometers mit dem die Temperatur der heißen Gase indirekt über die Messung der Wärmestrahlung der Ausmauerung im Überströmkanal gemessen wird. Gerade auch bei einem Flammenüberschlag gemäß Fig. 3 ist durch Farbe der Flamme ein plötzlicher, sehr charakteristischer Ausschlag am Messgerät feststellbar, welcher der ungewünschten Situation eindeutig und vor allem unverzüglich zugeordnet werden kann.

Die Messeinrichtung 13 steht mit einer Steuereinrichtung 14 in Verbindung, welche wiederum mit den Brennstoff-Zuführeinrichtungen 4, 5 und den Verbrennungsluft-Zuführeinrichtungen 6, 7 verbunden ist und zur Regelung des Verhältnisses von Brennstoff zur Verbrennungsluft in Abhängigkeit des von der Messeinrichtung ermittelten Messwertes dient.

Es ist allgemein bekannt, dass die Reaktivität des gebrannten Kalkes in direktem Zusammenhang mit der sich in der Brennzone B ausbildenden Länge der Flammen F steht. Die Reaktivität des gebrannten Kalkes liegt im vorgegebenen Sollbereich (Sollwert) wenn die Flammen bis zum unteren Rand der Brennzone B reichen, wie dies in Fig. 1 dargestellt ist. In den Fig. 2 und 3 ist die Betriebssituation des in Fig. 1 dargestellten Kalkofens bei zur kurzer Flamme (Flammenlänge l₁ in Fig. 1) und bei zu großer Flammenlänge (Flammenlänge l₂ in Fig. 3) dargestellt.

Eine Veränderung der Flammenlänge stellt sich beispielsweise dann ein, wenn sich das Verhältnis von Brennstoff zu Verbrennungsluft ändert. Eine solche Veränderung kann sich bereits alleine durch die zu unregelmäßigen Zeitpunkten freigesetzten kerogenen Bestandteile des Kalkes ergeben, wodurch sich unerwünschte Schwankungen in der Reaktivität des Endproduktes ergeben.

Nachdem sich die Veränderung des Verhältnisses von Brennstoff zu Verbrennungsluft auf die Flammenlänge und damit auch unmittelbar auf die Reaktivität des Endproduktes auswirkt, wird erfindungsgemäß vorgeschlagen, durch eine möglichst frühzeitige Messung einen Parameter der heißen Gase zur ermitteln, welcher für die sich ausbildende Flammenlänge charakteristisch ist. Wenngleich eine NOₓ- oder CO-Messung hiefür grundsätzlich in Betracht kommen, hat die Regelung aufgrund einer Temperaturmessung den entscheidenden Vorteil, dass keine zusätzlichen Messeinrichtungen erforderlich sind, da eine Temperaturmessung ohnehin erforderlich ist.

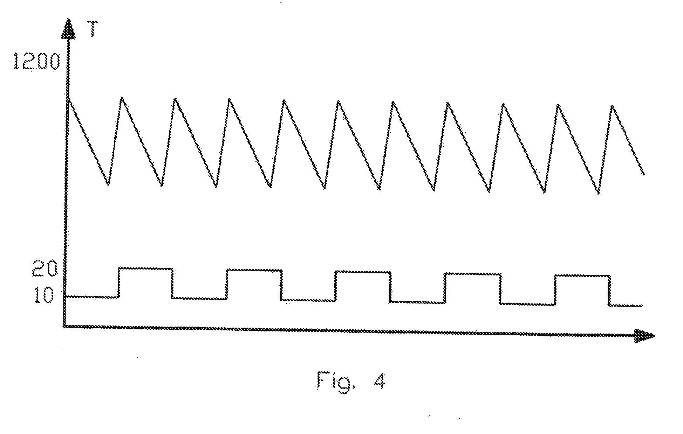

Fig. 4 zeigt den über die Messeinrichtung 13 gemessenen Temperaturverlauf (obere Kurve). Die untere Kurve gibt an, welcher der beiden Schächte 1 oder 2 zu einem bestimmten Zeitpunkt brennt. Bei 10 brennt der Schacht 1 und bei 20 der Schacht 2. Im dargestellten Beispiel folgt in jeder Periode einem steilen Temperaturanstieg ein langsamer Abfall. Der Temperaturverlauf kann aber von Ofen zu Ofen sehr unterschiedlich und auch sehr unregelmäßig sein.

Bei den der Erfindung zugrundeliegenden Versuchen hat sich nun gezeigt, dass die durchschnittliche Temperatur der heißen Gase im Überströmkanal unter Berücksichtigung der Minimaltemperaturen der heißen Gase im Überströmkanal zur Ermittlung eines Parameters herangezogen werden kann, der in direktem Zusammenhang mit der sich ausbildenden Flammenlänge steht.

Der Parameter wird durch die Differenz des Durchschnitts der Temperatur der heißen im Überströmkanal und des Durchschnitts der Minimaltemperaturen der heißen Gase im Überströmkanal bildet. Diese Temperaturdifferenz ΔT wird dann mit einem einstellbaren Sollwert oder Sollbereich verglichen und zur Änderung der zuzuführenden Verbrennungsluft herangezogen. Dabei wird die Verbrennungsluftmenge erhöht, wenn die ermittelte Differenz gegenüber dem einstellbaren Sollwert/-bereich zu groß ist und verringert, wenn sie zu klein ist.

Bei der Ermittlung des Durchschnitts der Temperatur der heißen Gase im Überströmkanal werden zweckmäßigerweise mehrere Brennzyklen berücksichtigt, wobei bei jedem Brennzyklus ein einstellbarer Zeitraum zur Beginn und zum Ende jeder in die Ermittlung eingehenden Brennzeit unberücksichtigt bleibt. Auf diese Weise wird das Ergebnis nicht durch Temperaturen während der Umschaltphase der beiden Schächte verfälscht.

Gemäß einer weiteren Regelung wird die Menge des zu zuführenden Brennstoffs in Abhängigkeit der Temperatur der heißen Gase im Überströmkanal, insbesondere in Unabhängigkeit der Durchschnittstemperatur, geändert.

Der Sollwert für den ermittelten Parameter und/oder die durchschnittliche Temperatur der heißen Gase im Überströmkanal sind zweckmäßigerweise an die Durchsatzleistung des Ofens und/oder der Korngröße des zu brennenden Materials anzupassen.

Durch eine geeignete Wahl des Regelschritts und der Vorgabe, nach welcher Anzahl von Brennzyklen ein Regelschritt erfolgen soll, kann der Kalkofen automatisch gesteuert werden, wobei eine äußerst gleichbleibende Reaktivität und ein konstanter Rest-CO₂-Gehalt des Endprodukts erreicht wird. Die nachträgliche Bestimmung der Eigenschaften, wie Reaktivität oder Rest-CO₂-Gehalt dienen dann nur noch zur Kontrolle.

## Patentansprüche

1. Verfahren zum Betreiben eines Gleichstrom-Gegenstrom-Regenerativ-Kalkofens mit wenigstens zwei Schächten (1, 2), die jeweils eine Vorwärmzone (V), eine Brennzone (B) und eine Kühlzone (K) aufweisen, sowie einem die beiden Schächte verbindenden Überströmkanal (3), mit folgenden Verfahrensschritten:
- die beiden Schächte werden abwechselnd als Brennschacht und Abgasschacht betrieben,
- dem Brennschacht wird Verbrennungsluft und Brennstoff zugeführt, wobei sich eine entsprechende Flammenlänge ausbildet und
- die im Brennschacht entstehenden heißen Gase gelangen über den Überströmkanal (3) in den Abgasschacht,
**dadurch gekennzeichnet, dass** wenigstens ein für die Ausbildung der Flammenlänge charakteristischer Parameter der heißen Gase durch eine direkte oder indirekte Messung im Bereich des Überströmkanals (3) ermittelt wird und das Verhältnis von Brennstoff zu Verbrennungsluft in Abhängigkeit dieses Parameters geändert wird, um eine vorgegebene Flammenlänge einzustellen.

2. Verfahren nach Anspruch 1, **dadurch gekennzeichnet, dass** der Parameter durch eine Temperaturmessung im Bereich des Überströmkanals (3) ermittelt wird.

3. Verfahren nach Anspruch 1, **dadurch gekennzeichnet, dass** der Parameter aus der durchschnittlichen Temperatur der heißen Gase im Überströmkanal unter Berücksichtigung der Minimaltemperaturen der heißen Gase im Überströmkanal (3) ermittelt wird.

4. Verfahren nach Anspruch 1, **dadurch gekennzeichnet, dass** der Parameter aus dem NOₓ-Gehalt und/oder CO-Gehalt des Abgases ermittelt wird.

5. Verfahren nach Anspruch 1, **dadurch gekennzeichnet, dass** zur Einstellung der Flammenlänge im Brennschacht folgende Verfahrensschritte durchgeführt werden:
a. Ermittlung des Durchschnitts der Temperatur der heißen Gase im Überströmkanal (3),
b. Ermittlung des Durchschnitts der Minimaltemperaturen der heißen Gase im Überströmkanal (3),
c. Berechnung der Differenz (ΔT) der beiden Durchschnitte,
d. Vergleichen der Differenz mit einem einstellbaren Sollwert und Änderung der zuzuführenden Verbrennungsluftmenge in Abhängigkeit des Vergleichsergebnisses.

6. Verfahren nach Anspruch 5, **dadurch gekennzeichnet, dass** bei der Ermittlung des Durchschnitts der Temperatur der heißen Gase im Überströmkanal (3) ein einstellbarer Zeitraum zu Beginn und zum Ende jeder in die Ermittlung eingehenden Brennzeit unberücksichtigt bleibt.

7. Verfahren nach Anspruch 5, **dadurch gekennzeichnet, dass** die Ermittlung des Durchschnitts der Minimaltemperaturen der heißen Gase im Überströmkanal (3) über eine einstellbare Anzahl von Ofenzyklen erfolgt.

8. Verfahren nach Anspruch 5, **dadurch gekennzeichnet, dass** die Ermittlung des Durchschnitts der Temperatur der heißen Gase im Überströmkanal (3) über eine einstellbare Anzahl von Ofenzyklen erfolgt.

9. Verfahren nach Anspruch 5, **dadurch gekennzeichnet, dass** bei dem Verfahrensschritt a) und/oder b) der gleitende Durchschnitt ermittelt wird.

10. Verfahren nach Anspruch 5, **dadurch gekennzeichnet, dass** die zuzuführende Verbrennungsluftmenge erhöht wird, wenn die ermittelte Differenz gegenüber dem einstellbaren Sollwert zu groß ist und die zuzuführende Verbrennungsluftmenge verringert wird, wenn die ermittelte Differenz gegenüber dem einstellbaren Sollwert zu klein ist.

11. Verfahren nach Anspruch 1, **dadurch gekennzeichnet, dass** die zuzuführende Brennstoffmenge erhöht wird, wenn die Temperatur der heißen Gase im Überströmkanal zu klein ist und die zuzuführenden Brennstoffmenge verringert wird, wenn die Temperatur der heißen Gase im Überströmkanal (3) zu groß ist.

12. Verfahren nach Anspruch 5, **dadurch gekennzeichnet, dass** für die durchschnittliche Temperatur der heißen Gase im Überströmkanal (3) ein Sollwert in Abhängigkeit von der Durchsatzleistung des Ofens und/oder der Korngröße des zubrennenden Materials eingestellt wird, der für die Änderung der Brennstoffmenge und/oder die Änderung der Verbrennungsluftmenge verwendet wird.

13. Gleichstrom-Gegenstrom-Regenerativ-Kalkofens, mit
- wenigstens zwei Schächten (1, 2), die jeweils eine Vorwärmzone (V), eine Brennzone (B) und eine Kühlzone (K) aufweisen, wobei die beiden Schächte (1, 2) abwechselnd als Brennschacht und Abgasschacht betrieben werden,
- wenigstens einer jedem Schacht zugeordneten Brennstoff-Zuführeinrichtung (4, 5),
- wenigstens einer jedem Schacht zugeordneten Verbrennungsluft-Zuführeinrichtung (6, 7),
- einem die beiden Schächte (1, 2) verbindenden Überströmkanal (3)
- einer im Bereich des Überströmkanals angeordneten Messeinrichtung (13) zur Ermittlung wenigstens eines Parameters der heißen Gase im Überströmkanal (3),
**gekennzeichnet durch** eine Steuereinrichtung (14), die mit der Brennstoff-Zuführeinrichtung (4, 5), der Verbrennungsluft-Zuführeinrichtung (6, 7)und der Messeinrichtung (13) in Verbindung steht und zur Änderung der Flammenlänge gemäß dem Verfahren nach einem oder mehreren der vorhergehenden Ansprüche ausgebildet ist.

## Claims

1. Method for operating a parallel flow regenerative lime kiln having at least two shafts (1, 2), which each have a preheating zone (V), a combustion zone (B) and a cooling zone (K), and an overflow channel (3) which connects the two shafts, having the following method steps:
- the two shafts are operated alternately as a combustion shaft and exhaust gas shaft,
- combustion air and fuel are supplied to the combustion shaft, a corresponding flame length being formed, and
- the hot gases which are produced in the combustion shaft reach the exhaust gas shaft via the overflow channel (3),
**characterised in that** at least one parameter of the hot gases which is characteristic of the formation of the flame length is established by means of direct or indirect measurement in the region of the overflow channel (3) and the ratio of fuel to combustion air is changed in accordance with this parameter in order to adjust a predetermined flame length.

2. Method according to claim 1, **characterised in that** the parameter is established by means of a temperature measurement in the region of the overflow channel (3).

3. Method according to claim 1, **characterised in that** the parameter is established from the mean temperature of the hot gases in the overflow channel taking into consideration the minimum temperatures of the hot gases in the overflow channel (3).

4. Method according to claim 1, **characterised in that** the parameter is established from the NOₓ content and/or the CO content of the exhaust gas.

5. Method according to claim 1, **characterised in that**, in order to adjust the flame length in the combustion shaft, the following method steps are carried out:
a. establishing the mean value of the temperature of the hot gases in the overflow channel (3),
b. establishing the mean value of the minimum temperatures of the hot gases in the overflow channel (3),
c. calculating the difference (ΔT) of the two mean values,
d. comparing the difference with an adjustable desired value and changing the quantity of combustion air to be supplied in accordance with the comparison result.

6. Method according to claim 5, **characterised in that**, when establishing the mean value of the temperature of the hot gases in the overflow channel (3), an adjustable period of time at the beginning and at the end of each combustion time involved in the establishment is not taken into consideration.

7. Method according to claim 5, **characterised in that** the establishment of the mean value of the minimum temperatures of the hot gases in the overflow channel (3) is carried out by means of an adjustable number of kiln cycles.

8. Method according to claim 5, **characterised in that** the establishment of the mean value of the temperature of the hot gases in the overflow channel (3) is carried out by means of an adjustable number of kiln cycles.

9. Method according to claim 5, **characterised in that** in the method step a) and/or b) the sliding average is established.

10. Method according to claim 5, **characterised in that** the quantity of combustion air to be supplied is increased when the established difference is too great with respect to the adjustable desired value and the quantity of combustion air to be supplied is decreased when the established difference is too small with respect to the adjustable desired value.

11. Method according to claim 1, **characterised in that** the quantity of fuel to be supplied is increased when the temperature of the hot gases in the overflow channel is too low and the quantity of fuel to be supplied is reduced when the temperature of the hot gases in the overflow channel (3) is too high.

12. Method according to claim 5, **characterised in that**, for the mean temperature of the hot gases in the overflow channel (3), a desired value is adjusted in accordance with the throughput of the kiln and/or the grain size of the material to be burnt, which desired value is used for the adjustment of the quantity of fuel and/or the change of the quantity of combustion air.

13. Parallel flow regenerative lime kiln having:
- at least two shafts (1, 2) which each have a preheating zone (V), a combustion zone (B) and a cooling zone (K), the two shafts (1, 2) being operated alternately as a combustion shaft and exhaust gas shaft,
- at least one fuel supply device (4, 5) associated with each shaft,
- at least one combustion air supply device (6, 7) associated with each shaft,
- an overflow channel (3) which connects the two shafts (1, 2)
- a measurement device (13) which is arranged in the region of the overflow channel for establishing at least one parameter of the hot gases in the overflow channel (3), **characterised by** a control device (14) which is connected to the fuel supply device (4, 5), the combustion air supply device (6, 7) and the measurement device (13) and which is constructed for changing the flame length in accordance with the method according to one or more of the preceding claims.

## Revendications

1. Procédé pour faire fonctionner un four à chaux régénérateur à équicourant - contrecourant qui est doté d'au moins deux cuves (1, 2) comprenant une zone de préchauffage (V), une zone de combustion (B) et une zone de refroidissement (K), ainsi que d'un canal de transfert (3) qui relie les deux cuves, ledit procédé comprenant les étapes suivantes :
- les deux cuves sont exploitées alternativement en tant que cuve de combustion et cuve de gaz d'échappement,
- la cuve de combustion est alimentée en air de combustion et en combustible, une longueur de flamme adéquate se formant, et
- les gaz chauds, qui se développant dans la cuve de combustion, parviennent dans la cuve de gaz d'échappement par l'intermédiaire du canal de transfert (3),
**caractérisé en ce qu'**au moins un paramètre des gaz chauds, caractéristique pour la longueur de la flamme, est déterminé par une mesure directe ou indirecte dans la région du canal de transfert (3) et le rapport entre combustible et air de combustion est modifié en fonction de ce paramètre pour régler une longueur de flamme prédéterminée.

2. Procédé selon la revendication 1,
**caractérisé en ce que** le paramètre est déterminé par une mesure de la température dans la région du canal de transfert (3).

3. Procédé selon la revendication 1,
**caractérisé en ce que** le paramètre est déterminé à partir de la température moyenne des gaz chauds dans le canal de transfert, compte tenu des températures minimales des gaz chauds dans le canal de transfert (3).

4. Procédé selon la revendication 1,
**caractérisé en ce que** le paramètre est déterminé à partir de la teneur en NOₓ et / ou de la teneur en CO des gaz d'échappement,

5. Procédé selon la revendication 1,
**caractérisé en ce que**, pour le réglage de la longueur de la flamme dans la cuve de combustion, les étapes de processus suivantes sont exécutées :
a) détermination de la moyenne des températures des gaz chauds dans le canal de transfert (3),
b) détermination de la moyenne des températures minimales des gaz chauds dans le canal de transfert (3),
c) calcul de la différence (Δ T) entre les deux moyennes,
d) comparaison de la différence avec une valeur de consigne réglable et modification de la quantité d'air de combustion à amener, en fonction du résultat de la comparaison.

6. Procédé selon la revendication 5,
**caractérisé en ce que.** lors de la détermination de la température moyenne des gaz chauds dans le canal de transfert (3), un laps de temps réglable est négligé au début et à la fin de chaque temps de combustion prise en compte dans la détermination.

7. Procédé selon la revendication 5,
**caractérisé en ce que** la détermination de la moyenne des températures minimales des gaz chauds dans le canal de transfert (3) est effectuée sur un nombre réglable de cycles de four.

8. Procédé selon la revendication 5.
**caractérisé en ce que** la détermination de la moyenne de température des gaz chauds dans le canal de transfert (3) est effectuée sur un nombre réglable de cycles de four.

9. Procédé selon la revendication 5,
**caractérisé en ce que** la moyenne mobile est déterminée au cours des étapes a) et / ou b) du procédé.

10. Procédé selon la revendication 5,
**caractérisé en ce que** l'on augmente la quantité d'air de combustion à introduire si la différence déterminée par rapport à la valeur de consigne est trop grande et l'on réduit la quantité d'air de combustion à introduire si la différence déterminée par rapport à la valeur de consigne est trop faible.

11. Procédé selon la revendication 1,
**caractérisé en ce que** l'on augmente la quantité d'air de combustion à introduire si la température des gaz chauds dans le canal de transfert est trop basse et l'on réduit la quantité d'air de combustion à introduire si la température des gaz chauds dans le canal de transfert (3) est trop élevée.

12. Procédé selon la revendication 5,
**caractérisé en ce que**, pour la température moyenne des gaz chauds dans le canal de transfert (3), on règle, en fonction de la capacité du four et / ou de la granulométrie du produit à calciner, une valeur de consigne qui est utilisée pour la modification de la quantité de combustible et / ou la modification de la quantité d'air de combustion.

13. Four à chaux régénérateur à équicourant-contrecourant qui comprend
- au moins deux cuves (1, 2) comprenant chacune une zone de préchauffage (V), une zone de combustion (B) et une zone de refroidissement (K), sachant que les deux cuves (1, 2) sont exploitées alternativement en tant que cuve de combustion et cuve de gaz d'échappement,
- au moins un dispositif d'alimentation en combustible (4, 5) associé à chacune des cuve,
- au moins un dispositif d'alimentation en air de combustion (6, 7) associé à chacune des cuve,
- un canal de transfert (3) qui relie les deux cuves (1, 2),
- un dispositif de mesure (13) disposé dans le la région du canal de transfert pour la détermination d'au moins un paramètre des gaz chauds dans le canal de transfert (3), **caractérisé par** un système de commande (14), qui est en relation avec le dispositif d'alimentation en combustible (4, 5), le dispositif d'alimentation en air de combustion (6, 7) et le dispositif de mesure (13) et qui est conçu pour la modification de la longueur de flamme conformément au procédé selon l'une des revendications précédentes.
